# EUROPÄISCHE PATENTSCHRIFT

(11) **EP 2 165 055 B1**
(45) Veröffentlichungstag und Bekanntmachung des Hinweises auf die Patenterteilung: **13.07.2016**
(21) Anmeldenummer: 08760650.5
(22) Anmeldetag: 06.06.2008
(51) Int. Cl.: F01N 5/02, F02G 5/02

(54) **ANORDNUNG ZUR ABGASWÄRMENUTZUNG**
ARRANGEMENT FOR EXHAUST GAS HEAT RECOVERY
SYSTÈME DE RÉCUPÉRATION DE LA CHALEUR DES GAZ D'ÉCHAPPEMENT

(30) Priorität: 17.07.2007 DE 102007033611
(43) Veröffentlichungstag der Anmeldung: 24.03.2010
(73) Patentinhaber: AMOVIS GmbH, 13355 Berlin (DE); SteamDrive GmbH, 89522 Heidenheim (DE)
(72) Erfinder: HOETGER, Michael, 14193 Berlin (DE); COLLISI, Jörg, 13089 Berlin (DE); BERGER, Jürgen, 89547 Garstetten (DE); BARTOSCH, Stephan, 89192 Rammingen (DE)
(74) Vertreter: BRP Renaud & Partner mbB Rechtsanwälte Patentanwälte Steuerberater
(86) Internationale Anmeldenummer: PCT/EP2008/057078
(87) Internationale Veröffentlichungsnummer: WO 2009/010339

(56) Entgegenhaltungen:
- EP-A- 1 455 062
- DE-A1- 4 141 051
- DE-A1-102004 052 106
- JP-A- 60 222 518

## Beschreibung

### Teschniques Gebiet

Die Erfindung betrifft eine Anordnung zur Abgaswärmenutzung mit einer von Abgas beaufschlagten Dampferzeugeranordnung, in welcher in dem Abgas enthaltene Wärme zur weiteren Nutzung auf ein Arbeitsmedium übertragbar ist.

Bei einem Verbrennungsprozess, zum Beispiel in einem Motor, wird ein Energieträger unter Wärmeerzeugung verbrannt. Das Abgas expandiert unter Erzeugung von mechanischer Energie. Diese Energie wird auf eine Welle übertragen. Mit der Welle kann ein Fahrzeug oder ein elektrischer Generator angetrieben werden. Energie ist wertvoll. Es gibt daher vielfältige Bestrebungen auch die in dem Abgas verbleibende Restwärme zu nutzen.

### Stand der Technik

Es ist bekannt, heißes Abgas als Wärmequelle in einem zusätzlichen Kreisprozess mit einem Expander und einem Kondensator zu nutzen.

DE 2006 036 122 A1 offenbart eine Antriebseinrichtung mit Abgaswärmenutzung. Das von einem Dieselmotor erzeugte, heiße Abgas wird teilweise zurück in den Motor geführt. Dadurch wird die Emissionsbildung verringert. Im übrigen beaufschlagt das Abgas einen Arbeitsmittel-Kreislauf. Das Arbeitsmittel wird mit der Abgaswärme und der Wärme des Kühlkreislaufs des Motors erwärmt und unter Arbeitsleistung in einer Expansionsmaschine expandiert.

Die bei der Abgaswärmenutzung verwendeten Dampfkreisprozesse haben einen Wirkungsgrad, der unter anderem auch von der Arbeitsmitteltemperatur abhängt. Wenn das Abgas zu wenig Wärme in den Dampfkreisprozess einspeist, sinkt die Arbeitsmitteltemperatur. Dann verschlechtert sich der Wirkungsgrad und die Arbeitsleistung. Wenn zuviel Abgaswärme zur Verfügung steht, verschlechtert sich der Wirkungsgrad ebenfalls. Ein Teil der Abgasenergie bleibt dann ungenutzt.

EP-A-1 455 062 offenbart eine Anordnung zur Abgaswärmenutzung mit einer von Abgas beaufschlagten Dampferzeugeranordnung, in welcher in dem Abgas enthaltene Wärme zur weiteren Nutzung auf ein Arbeitsmedium übertragbar ist.

JP 60 222 518 A offenbart eine Anordnung mit einem Abgas-beaufschlagten Katalysator, der einen Wärmespeicher aufweist.

### Offenbarung der Erfindung

Es ist Aufgabe der Erfindung, die Energiebilanz bei der eingangs beschriebenen Abgaswärmenutzung weiter zu verbessern. Erfindungsgemäß wird die Aufgabe gelöst durch
(a) einen von dem Abgas beaufschlagbaren Wärmespeicher, und
(b) Steuermittel zur Steuerung von Abgasteilströmen nach Maßgabe eines die verfügbare Wärmeenergie des Abgases repräsentierenden Wertes durch den Wärmespeicher und die Dampferzeugeranordnung.

Insbesondere wird die Aufgabe auch gelöst durch ein Verfahren zur Abgaswärmenutzung mit den Schritten:
(a) Beaufschlagen einer Dampferzeugeranordnung mit Abgaswärme;
(b) wenn mehr Abgaswärme zur Verfügung steht als für die Dampferzeugung erforderlich ist: Umleiten eines Abgasteilstroms in einen Wärmespeicher;
(c) wenn weniger Abgaswärme zur Verfügung steht, als für die Dampferzeugung erforderlich ist und die Temperatur des Wärmespeichers höher ist als die Temperatur des in die Anordnung eintretenden Abgases: Leiten des Abgasstroms durch den Wärmespeicher und anschließend durch die Dampferzeugeranordnung.

Die Erfindung beruht auf der Erkenntnis, dass der Einsatz eines Wärmespeichers die Energiebilanz wesentlich verbessert. Einerseits wird ungenutzte Energie in den Wärmespeicher umgeleitet und steht so für die spätere Verwendung zur Verfügung. Sie geht also nicht verloren. Andererseits kann die Abgastemperatur bei Bedarf erhöht werden und so der Wirkungsgrad des Dampfkreisprozesses im optimalen Bereich gehalten werden. Es wird also neben der Nutzung der Abgaswärme ein weiterer Effekt erreicht. Die Beibehaltung des optimalen Wirkungsgrads führt zu einer weiteren Verbesserung der Energiebilanz.

Vorzugsweise umfassen die Steuermittel einen Temperatursensor, der die Temperatur der in die Anordnung eingespeisten Abgastemperatur erfasst. Die Temperatur repräsentiert die in dem Abgas enthaltene Wärmeenergie. Überschreitet die Temperatur einen oberen Schwellwert, kann ein Abgasteilstrom in den Wärmespeicher umgeleitet werden. Das Abgas überträgt die Wärme auf den Wärmespeicher und wird anschließend an die Umwelt abgegeben. Der Umfang des umgeleiteten Abgasteilstroms richtet sich dabei nach der gemessenen Temperatur. Bei geringer Überschreitung wird nur ein kleiner Abgasteilstrom zum Wärmespeicher geleitet. Bei hoher Abgastemperatur wird ein großer Anteil zum Wärmespeicher geleitet. Vorzugsweise wird aber immer ein Abgasteilstrom zur Dampferzeugeranordnung gleitet, der für einen optimalen Wirkungsgrad ausreicht.

Die Steuermittel können weiterhin einen Temperatursensor umfassen, der die Dampfaustrittstemperatur der Dampferzeugeranordnung erfasst mit diesem Temperatursensor wird emittelt, ob der Dampferzeugeranordnung ausreichend Abgaswärme zugeführt wird. Unterschreitet die Dampfaustrittstemperatur einen Sollwert bei ausreichender Abgastemperatur und wird Abgas zum Wärmespeicher geleitet, so wird der Abgasteilstrom zum Wärmespeicher reduziert und der Abgasteilstrom zur Dampferzeugeranordnung erhöht, bis die Dampfaustrittstemperatur wieder ihren Sollwert erreicht.

Wenn die Dampfaustrittstemperatur den Sollwert unterschreitet und es wird kein Abgas zum Wärmespeicher geleitet, weil die Abgastemperatur zu niedrig ist, wird zunächst die Temperatur des Wärmespeichers gemessen. Zu diesem Zweck können die Steuermittel einen weiteren Temperatursensor am Wärmespeicher umfassen. Wenn der Wärmespeicher "voll" ist und eine entsprechend hohe Temperatur aufweist, wird das Abgas mit zu niedriger Abgastemperatur durch den Wärmespeicher gleitet. Dort wird es auf die für den Dampferzeuger erforderliche Temperatur erwärmt. Dadurch wird ermöglicht, dass der Dampfkreisprozess auch bei geringer Abgaswärmeleistung zumindest für eine gewisse Zeit bei optimalem Wirkungsgrad weiter arbeiten kann.

Wenn die Dampfaustrittstemperatur den Sollwert überschreitet, wird ein Abgasteilstrom zum Wärmespeicher geleitet bzw. der Abgasteilstrom zum Wärmespeicher erhöht.

Vorzugsweise umfassen die Steuermittel Ventilanordnungen oder Klappen, mit welchen Abgasteilströme des in die Anordnung eintretenden Abgases in einem ausgewählten Verhältnis durch den Wärmespeicher und durch einen Bypass am Wärmespeicher vorbei geleitet werden. Ventile oder Klappen können leicht von einer Steuereinheit angesteuert werden. Weiterhin können die Steuermittel Ventilanordnungen oder Klappen umfassen, mit welchen der aus dem Wärmespeicher austretende Abgasstrom durch den die Dampferzeugeranordnung oder durch einen Bypass an der Dampferzeugeranordnung vorbei geleitet werden.

Die Dampferzeugeranordnung kann in einen Dampfkreisprozess integriert sein. Die in dem Dampfkreisprozess erzeugte mechanische oder elektrische Energie steht zur weiteren Verwendung zur Verfügung. Wird sie der gleichen Verwendung zugeführt, wie der Primärprozess, so wird die Energiebilanz des Primärprozesses entsprechend verbessert.

Vorzugsweise umfasst der Wärmespeicher einen abgasresistenten, zumindest bis 700°C temperaturfesten Feststoff mit einer hohen spezifischen Wärmekapazität. Dieser kann insbesondere von einem Siliziumcarbid (SiC)-Körper gebildet sein. SiC ist gut verfügbar und leicht zu entsorgen. Es sind aber auch andere Stoffe denkbar, zum Beispiel Siliziuminfiltriertes SiC (Si-SiC), SiC-Pulver, das mit Wasser gemischt und extrudiert wurde, verschiedene technische Keramiken aus Aluminiumoxid oder ähnlichem oder Nitride. Auch Metalle sind geeignet, werden jedoch aufgrund ihres hohen Gewichts für mobile Anwendungen weniger bevorzugt. Im Gegensatz zu bekannten Wärmespeichern, etwa auskustallisierenden Salzlösungen, erfolgt die Speicherung ohne Phasenübergang. Es handelt sich um leicht transportierbare feste Stoffe, die keine Flüssigkeit sind, kein Dampf oder dergleichen.

Im Gegensatz zu Batterien, bei denen Restwärme zunächst in elektrische Energie umgewandelt wird, wird die Wärme direkt gespeichert. Entsprechend wird hier ohne umweltschädliche Chemikalien gearbeitet. Der Speicher ist beliebig auf- und entladbar und die Wärme ist schneller verfügbar.

Die Anordnung zur Abgaswärmenutzung kann in jedweder Antriebsanordnung eingesetzt werden, die einen Antriebsmotor und einen Dampfkreisprozess enthält. Insbesondere kann eine Antriebsanordnung eingesetzt werden, bei der der Dampfkreisprozess eine Expansionsmaschine zum Antrieb einer Welle als Hilfsantrieb umfasst, in welcher der in der Dampferzeugeranordnung erzeugte Dampf expandiert wird. Alternativ kann der Dampfkreisprozess eine Expansionsmaschine zum Antrieb eines Generators umfassen, in welcher der in der Dampferzeugeranordnung erzeugte Dampf expandiert wird.

Ausgestaltungen der Erfindung sind Gegenstand der Unteransprüche. Ein Ausführungsbeispiel ist nachstehend unter Bezugnahme auf die beigefügten Zeichnungen näher erläutert.

### Kurze Beschreibung der Zeichnungen

- Fig. 1: ist eine schematische Darstellung einer Anordnung zur Abgaswärmenutzung, bei der heißes Abgas teilweise einem Wärmespeicher zugeführt wird.
- Fig.2: zeigt die Anordnung aus Fig.2, bei der die Abgaswärme nicht für einen optimalen Wirkungsgrad in einem Dampfkreisprozess ausreicht und daher in dem Wärmespeicher aufgewärmt wird.
- Fig.3: illustriert die verschiedenen Arbeitspunkte der Anordnung.

### Beschreibung des Ausführungsbeispiels

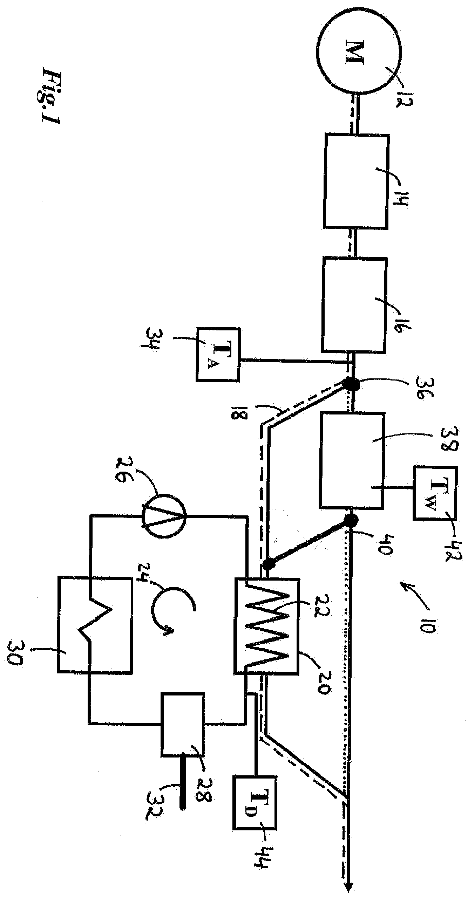

In Fig.1 ist eine allgemein mit 10 bezeichnete Anordnung zur Abgaswärmenutzung dargestellt. Ein Dieselmotor 12 mit einem Turbolader 14 dient als Antrieb für ein Fahrzeug. Dabei kann das Fahrzeug in jeder Form ausgebildet sein. Personenkraftfahrzeuge, Lastkraftfahrzeuge, Züge, Schiffe, Landmaschinen und dergleichen mehr können mit einer derartigen Anordnung versehen sein. Auch wenn das Ausführungsbeispiel im vorliegenden Fall anhand eines Dieselmotors beschrieben wird, so sind selbstverständlich auch der Einsatz eines Otto-Motors, Wankelmotors, Turbinen oder dergleichen möglich.

Das von dem Motor 12 erzeugte Abgas wird in einem Katalysator und weiteren Abgasbehandlungsstufen behandelt. Diese Abgasbehandlungsstufe ist in Fig.1 allgemein mit 16 bezeichnet.

Das heiße Abgas, repräsentiert durch eine gestrichelte Linie 18, wird einem Dampferzeuger 20 zugeführt. Nach Abkühlung des Abgases in dem Dampferzeuger 20 wird das Abgas nach außen abgegeben.

In dem Dampferzeuger 20 beaufschlagt das heiße Abgas einen Wärmeübertrager 22, der von einem Arbeitsmedium durchströmt wird. Der Dampferzeuger 20 ist Teil eines Dampfkreisprozesses 24. In dem Dampfkreisprozess 24 wird ein Arbeitsmedium mittels einer Speisewasserpumpe 26 auf ein erhöhtes Druckniveau gepumpt. Anschließend wird das Arbeitsmedium in dem Dampferzeuger 20 erhitzt. Das heiße, komprimierte Arbeitsmedium wird in einer Expansionsmaschine 28 unter Arbeitsleistung entspannt. Das entspannte Arbeitsmedium wird in einem Kondensator 30 wieder kondensiert und steht anschließend wieder für den erneuten Durchlauf des Kreisprozesses zur Verfügung.

Die in dem Expander 28 des Dampfkreisprozesses 24 erzeugte mechanische Energie wird auf eine Welle 32 übertragen. Diese Welle kann als Hilfsantrieb für das Fahrzeug dienen. Alternativ kann die Welle auch einen Klimakompressor oder einen Generator zur Stromerzeugung antreiben. In jedem Fall wird die Abgaswärme in einer Form genutzt, die zu einer Reduzierung des Energiebedarfs führt.

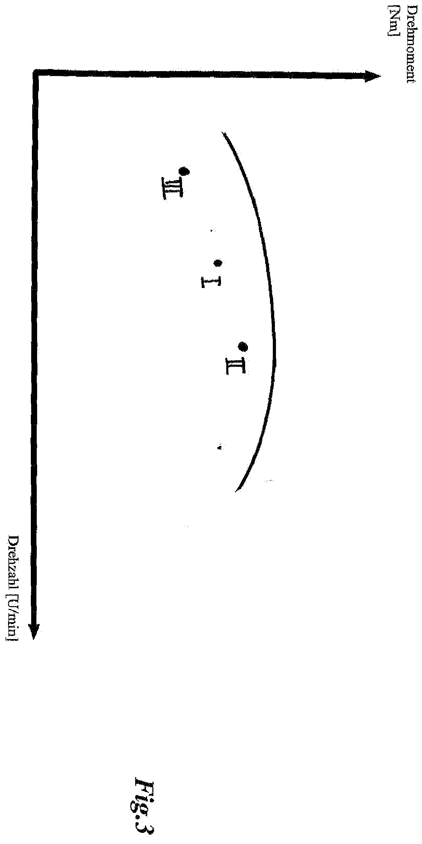

Es versteht sich, dass der oben beschriebene Clausius-Rankine Dampfkreisprozess 24 auch auf andere Weise ausgestaltet sein kann. So ist auch ein Dampfkreisprozess nach Calina oder dergleichen möglich. Die Ausgestaltung des Dampfkreisprozesses kann an die jeweiligen Gegebenheiten angepasst werden. Insbesondere wird der Dampfkreisprozess so ausgelegt, dass er bei seinem normalen Arbeitspunkt den optimalen Wirkungsgrad hat, d.h. dass bei den normalen Abgastemperaturen eine optimale Verdampfung im Dampferzeuger erfolgt. Dieser Arbeitspunkt ist in Figur 3 mit I bezeichnet.

Wenn nun die Last am Motor 12 steigt, d.h. wenn das Drehmoment steigt, steigt auch die Abgastemperatur. Dann liegt der Arbeitspunkt des Motors 12 nicht mehr bei I, sondern zum Beispiel bei II in Fig.3. Ein solcher Fall tritt zum Beispiel bei Aufwärtsfahrten auf, oder wenn besonders schnell gefahren wird.

Die mit der hohen Temperatur verbundene, hohe Wärmemenge des Abgases überschreitet den Energiebedarf des Dampferzeugers. Der Dampfkreisprozess hat entsprechend nicht mehr den optimalen Wirkungsgrad. Daher wird Die Dampfaustrittstemperatur T_{D} und die Abgastemperatur T_{A} mittels eines Temperatursensors 44 und 34 gemessen und an eine nicht dargestellte Steuerung weitergeleitet. Statt einer Temperaturmessung ist auch ein anderer, die Last repräsentierender Wert möglich, etwa die Berechnung des Lastpunktes aus der Pedalstellung unter Verwendung eines Kennfeldes, die Ermittlung der Motorendrehzahl oder dergleichen.

Wenn die Abgastemperatur bzw. der die Abgastemperatur repräsentierende Wert höher als ein Schwellwert ist, wird ein Ventil 36 geöffnet. Ein punktiert dargestellter Teilstrom 40 des Abgases wird durch einen Wärmespeicher 38 geleitet. Der übrige Teil des Abgases geht weiterhin durch den Dampferzeuger 20.

Der Wärmespeicher 38 ist ein außen isolierter, poröser Festkörper aus Siliziumcarbid (SiC). Der Wärmespeicher hat eine hohe spezifische Wärmekapazität. Er nimmt die Wärme direkt auf und speichert sie ab. Die Temperatur Tw des Wärmespeichers wird mit einem Temperatursensor 42 gemessen. Solange die Temperatur Tw des Wärmespeichers kleiner ist, als die Temperatur T_{A} des Abgases, kann der Wärmespeicher Energie in Form von Wärme aufnehmen und speichern.

Der Anteil des Abgasstroms, der durch den Wärmespeicher geleitet wird, richtet sich nach der Temperatur T_{A} des Abgasstroms. Je höher die Temperatur um so größer der Abgasteilstrom 40.

Wenn nun die Last am Motor 12 sinkt, d.h. wenn das Drehmoment sinkt, fällt auch die Abgastemperatur ab. Dann liegt der Arbeitspunkt des Motors 12 nicht mehr bei I, sondern zum Beispiel bei III in Fig.3. Ein solcher Fall tritt zum Beispiel bei Abwärtsfahrten auf, oder bei Fahrzeugstillstand. Bei Zügen tritt diese Situation auf, wenn nach langer Fahrt (viel Abgaswärme) der Zug in einem Bahnhof steht (wenig Abgaswärme).

Der Temperatursensor 34 ermittelt dann einen geringen Temperaturwert. Um nun die Dampfaustrittstemperatur T_{D} weiterhin auf einem optimalen Wert zu halten, wird das Abgas nun vollständig zunächst durch den Wärmespeicher 38 geleitet. Dort nimmt das Abgas die gespeicherte Wärme auf. Voraussetzung ist selbstverständlich, dass die Temperatur Tw im Wärmespeicher die Abgastemperatur T_{A} überschreitet. Anschließend werden die Ventile 46 und 48 so eingestellt, dass der vollständige Abgasstrom, repräsentiert durch die strichpunktierte Linie 50, zum Dampferzeuger 20 geleitet wird. Die im Wärmespeicher 38 aufgenommene Energie wird im Dampferzeuger 20 abgegeben. Auf diese Weise kann der Dampfkreisprozess weiter betrieben werden, bis die gespeicherte Wärme vollständig abgegeben ist.

Anhand eines kleinen Rechenbeispiels soll die Wirksamkeit der Anordnung beschrieben werden.

Ein Dieselmotor eines Lkws mit einer mittleren Last von 60% entsprechend 100 Kilowatt und einer Drehzahl von beispielsweise 1300 Umdrehungen pro Minute hat eine Abgastemperatur von etwa 450°C. In diesem Fall wird das gesamte Abgas zum Dampferzeuger 20 geleitet. Das Arbeitsmedium erreicht dann eine Temperatur von etwa 400°C. Der Dampfkreisprozess ist so ausgelegt, dass er bei dieser Betriebsweise einen optimalen Wirkungsgrad hat. Erreicht wird mit dem Dampfkreisprozess eine Leistung von 10 kW. Dies entspricht einer Reduzierung des Energieverbrauchs von 10%.

Im Vollastbereich bei Bergauffahrt wird der Gang zurückgeschaltet. Der Motor arbeitet dann mit 230 kW und 1800 U/min. Das Abgas hat nun eine Temperatur von etwa 600°C. 60% der Abgasenergie können im Dampferzeuger 20 abgegeben werden. Der Dampfkreisprozess hat einen Anteil an der gesamten Leistung von etwa 7 % Die verbleibenden 40% der Abgaswärme, entsprechend einem Abgasteilstrom von 40% werden in den Wärmespeicher 38 geleitet. Der Wärmespeicher 38 ist bis etwa 2000°C hochtemperaturfest und kann die Wärme problemlos aufnehmen.

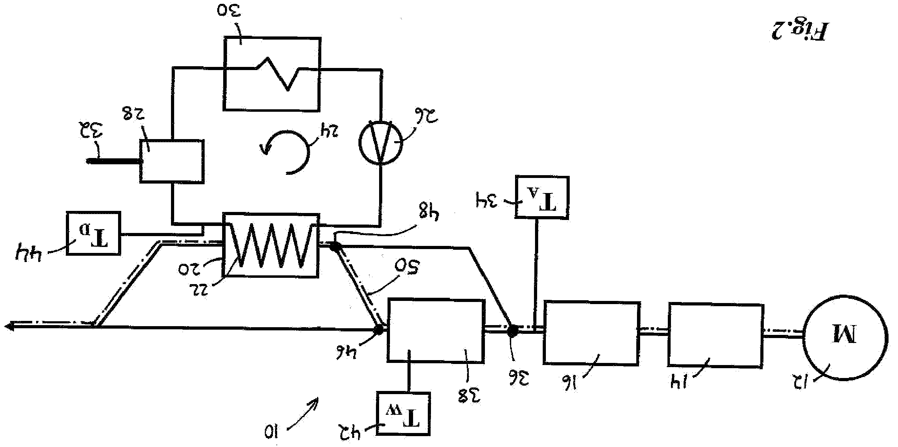

Im Leerlauf oder bei einer Fahrt mit niedriger Last von zum Beispiel 30 % entsprechend 1300 U/min arbeitet der Motor lediglich mit 50 kW. Die Abgastemperatur fällt auf 300 °C. Die Temperatur ist also nicht optimal für den Dampfkreisprozess. Nun wird der Abgasstrom wie in Fig. 2 dargestellt durch den Wärmespeicher geleitet und auf eine Temperatur oberhalb von 450°C aufgewärmt. Wenn der Wärmespeicher so heiß ist, dass die Dampfaustrittstemperatur T_{D} zu hoch wird, wird lediglich ein entsprechender Anteil durch den Wärmespeicher geleitet. Das richtig temperierte Abgas wird durch den Dampferzeuger 20 geleitet und der Dampfkreisprozess arbeitet trotz niedriger Last bei optimalem Wirkungsgrad und leistet etwa 10 kW der insgesamt 50kW. Der Anteil des Dampfkreisprozesses an der Gesamtleistung verdoppelt sich entsprechend von 10% auf 20%.

Der Einsatz des Wärmespeichers führt also im vorliegenden Beispiel zu einer Verbrauchseinsparung von zusätzlichen 10%.

Es versteht sich, dass dieses Beispiel lediglich ein Rechenbeispiel zur Veranschaulichung der Erfindung ist und Modifikationen sowohl der Anordnung selber, als auch der Betriebsweise den Erfindungsgedanken nicht berühren.

## Patentansprüche

1. Anordnung (10) zur Abgaswärmenutzung mit einer von Abgas (18) beaufschlagten Dampferzeugeranordnung (20), in welcher in dem Abgas enthaltene Wärme zur weiteren Nutzung auf ein Arbeitsmedium übertragbar ist, **gekennzeichnet durch**
(a) einen von dem Abgas (18) beaufschlagbaren Wärmespeicher (38), und
(b) Steuermittel zur Steuerung von Abgasteilströmen (40) nach Maßgabe eines die verfügbare Wärmeenergie des Abgases repräsentierenden Wertes **durch** den Wärmespeicher (38) und die Dampferzeugeranordnung (20).

2. Anordnung nach Anspruch 1, **dadurch gekennzeichnet, dass** die Steuermittel einen Temperatursensor (34) umfassen, der die Temperatur der in die Anordnung eingespeisten Abgastemperatur erfasst.

3. Anordnung nach einem der vorgehenden Ansprüche, **dadurch gekennzeichnet, dass** die Steuermittel einen Temperatursensor (44) umfassen, der die Dampfaustrittstemperatur der Dampferzeugeranordnung (20) erfasst.

4. Anordnung nach einem der vorgehenden Ansprüche, **dadurch gekennzeichnet, dass** die Steuermittel Ventilanordnungen oder Klappen (36) umfassen, mit welchen Abgasteilströme des in die Anordnung eintretenden Abgases in einem ausgewählten Verhältnis durch den Wärmespeicher (38) und durch einen Bypass am Wärmespeicher (38) vorbei geleitet werden.

5. Anordnung nach einem der vorgehenden Ansprüche, **dadurch gekennzeichnet, dass** die Steuermittel Ventilanordnungen oder Klappen (46, 48) umfassen, mit welchen der aus dem Wärmespeicher (38) austretende Abgasstrom durch den die Dampferzeugeranordnung (20) oder durch einen Bypass an der Dampferzeugeranordnung (20) vorbei geleitet werden.

6. Anordnung nach einem der vorgehenden Ansprüche, **dadurch gekennzeichnet, dass** die Dampferzeugeranordnung (20) in einen Dampfkreisprozess (24) integriert ist.

7. Anordnung nach einem der vorgehenden Ansprüche, **dadurch gekennzeichnet, dass** der Wärmespeicher (38) einen abgasresistenten, zumindest bis 700°C temperaturfesten Feststoff mit einer hohen spezifischen Wärmekapazität umfasst.

8. Anordnung nach Anspruch 7, **dadurch gekennzeichnet, dass** der Wärmespeicher (38) einen SiC-Körper umfasst.

9. Antriebsanordnung enthaltend einen Antriebsmotor (12) und einen Dampfkreisprozess (24), **gekennzeichnet durch** eine Anordnung (10) zur Abgaswärmenutzung nach einem der vorgehenden Ansprüche.

10. Antriebsanordnung nach Anspruch 9, **dadurch gekennzeichnet, dass** der Dampfkreisprozess (24) eine Expansionsmaschine (28) zum Antrieb einer Welle (32) als Hilfsantrieb umfasst, in welcher der in der Dampferzeugeranordnung (20) erzeugte Dampf expandiert wird.

11. Antriebsanordnung nach Anspruch 9, **dadurch gekennzeichnet, dass** der Dampfkreisprozess (24) eine Expansionsmaschine zum Antrieb eines Generators umfasst, in welcher der in der Dampferzeugeranordnung (20) erzeugte Dampf expandiert wird.

## Claims

1. Assembly (10) for using exhaust gas heat comprising a steam generating assembly (20) exposed to the exhaust gas (18), in which heat contained in the exhaust gas may be transferred to a working medium for further use, **characterized by**
(a) a heat store (38) exposed to said exhaust gas (18), and
(b) control means for controlling substreams (40) of the exhaust gas depending on a value representing the available exhaust gas heat energy through the heat store (38) and the steam generating assembly (20).

2. Assembly according to claim 1, **characterized in that** the control means comprise a temperature sensor (34) sensing the temperature of the exhaust gas fed into the assembly.

3. Assembly according to any of the preceding claims, **characterized in that** the control means comprise a temperature sensor (44) sensing the steam exit temperature of the steam generating assembly (20).

4. Assembly according to any of the preceding claims, **characterized in that** the control means comprise valve assemblies or flaps (36) to flow substreams of the exhaust gas entering the assembly with a selected ratio through the heat store (38) and through a bypass to bypass the heat store (38).

5. Assembly according to any of the preceding claims, **characterized in that** the control means comprise valve assemblies or flaps (46, 48) to flow the exhaust gas exiting the heat store (38) through the steam generating assembly (20) or through a bypass to bypass the steam generating assembly (20).

6. Assembly according to any of the preceding claims, **characterized in that** the steam generating assembly (20) is integrated in a steam cycle (24).

7. Assembly according to any of the preceding claims, **characterized in that** the heat store (38) comprises an exhaust gas resistant, solid material which is temperature stable up to a temperature of at least 700°C, having a high specific heat capacity.

8. Assembly according to claim 7, **characterized in that** the heat store (38) comprises a SiC-body.

9. Driving assembly comprising a driving engine (12) and a steam cycle (24), **characterized by** an assembly (10) for using exhaust gas heat according to any of the preceding claims.

10. Driving assembly according to claim 9, **characterized in that** the steam cycle (24) comprises an expansion engine (28) for driving a shaft (32) in the form of an auxiliary engine, said expansion engine expanding steam generated in the steam generating assembly (20).

11. Driving assembly according to claim 9, **characterized in that** the steam cycle (24) comprises an expansion engine for driving a generator, said expansion engine expanding steam generated in the steam generating assembly (20).

## Revendications

1. Ensemble (10) servant à la récupération de chaleur des gaz d'échappement, comprenant un ensemble de production de vapeur (20) soumis à l'action des gaz d'échappement (18), dans lequel la chaleur contenue dans les gaz d'échappement peut être transférée sur un milieu de travail afin de poursuivre la récupération, **caractérisé par**
(a) un accumulateur de chaleur (38) pouvant être soumis à l'action des gaz d'échappement (18) ; et
(b) des moyens de commande servant à commander des flux partiels de gaz d'échappement (40) conformément à une valeur représentant l'énergie thermique disponible des gaz d'échappement à travers l'accumulateur de chaleur (38) et l'ensemble de production de vapeur (20).

2. Ensemble selon la revendication 1, **caractérisé en ce que** les moyens de commande comprennent un capteur de température (34), qui détecte la température des gaz d'échappement injectés dans l'ensemble.

3. Ensemble selon l'une quelconque des revendications précédentes, **caractérisé en ce que** les moyens de commande comprennent un capteur de température (44), qui détecte la température de sortie de vapeur de l'ensemble de production de vapeur (20).

4. Ensemble selon l'une quelconque des revendications précédentes, **caractérisé en ce que** les moyens de commande comprennent des ensembles de soupape ou des clapets (36), à l'aide desquels des flux partiels de gaz d'échappement des gaz d'échappement entrant dans l'ensemble sont acheminés le long de l'accumulateur de chaleur (38) selon un rapport sélectionné par l'accumulateur de chaleur (38) et par une dérivation.

5. Ensemble selon l'une quelconque des revendications précédentes, **caractérisé en ce que** les moyens de commande comprennent des ensembles de soupape ou des clapets (46, 48), à l'aide desquels le flux de gaz d'échappement sortant de l'accumulateur de chaleur (38) est acheminé le long de l'ensemble de production de vapeur (20) par l'ensemble de production de chaleur (20) ou par une dérivation.

6. Ensemble selon l'une quelconque des revendications précédentes, **caractérisé en ce que** l'ensemble de production de vapeur (20) est intégré dans un processus cyclique de vapeur (24).

7. Ensemble selon l'une quelconque des revendications précédentes, **caractérisé en ce que** l'accumulateur de chaleur (38) comprend une matière solide résistante aux gaz d'échappement, résistante à des températures allant au moins jusqu'à 700 °C, présentant une capacité thermique spécifique élevée.

8. Ensemble selon la revendication 7, **caractérisé en ce que** l'accumulateur de chaleur (38) comprend un corps SiC.

9. Ensemble d'entraînement contenant un moteur d'entraînement (12) et un processus cyclique de vapeur (24), **caractérisé par** un ensemble (10) servant à récupérer la chaleur des gaz d'échappement selon l'une quelconque des revendications précédentes.

10. Ensemble d'entraînement selon la revendication 9, **caractérisé en ce que** le processus cyclique de vapeur (24) comprend une machine d'expansion (28) servant à entraîner un arbre (32) en tant qu'entraînement auxiliaire, dans laquelle la vapeur produite dans l'ensemble de production de vapeur (20) est expansée.

11. Ensemble d'entraînement selon la revendication 9, **caractérisé en ce que** le processus cyclique de vapeur (24) comprend une machine d'expansion servant à entraîner un générateur, dans laquelle la vapeur produite dans l'ensemble de production de vapeur (20) est expansée.
